# EUROPÄISCHE PATENTSCHRIFT

(11) **EP 1 285 474 B1**
(45) Veröffentlichungstag und Bekanntmachung des Hinweises auf die Patenterteilung: **16.12.2009**
(21) Anmeldenummer: 01934005.8
(22) Anmeldetag: 23.05.2001
(51) Int. Cl.: H01M 8/04, H01M 8/14, H01M 8/24

(54) **BRENNSTOFFZELLENANORDNUNG MIT ELEKTROLYTRESERVOIR**
FUEL-CELL ASSEMBLY COMPRISING AN ELECTROLYTE RESERVOIR
DISPOSITIF DE CELLULES ELECTROCHIMIQUES COMPORTANT UN RESERVOIR D'ELECTROLYTE

(30) Priorität: 26.05.2000 DE 10026206
(43) Veröffentlichungstag der Anmeldung: 26.02.2003
(73) Patentinhaber: MTU Onsite Energy GmbH, 85521 Ottobrunn (DE)
(72) Erfinder: HOFFMANN, Joachim, 84405 Dorfen (DE)
(74) Vertreter: Winter, Josef
(86) Internationale Anmeldenummer: PCT/EP2001/005917
(87) Internationale Veröffentlichungsnummer: WO 2001/093359

(56) Entgegenhaltungen:
- US-A- 4 761 348
- PATENT ABSTRACTS OF JAPAN vol. 011, no. 138 (E-503), 2. Mai 1987 (1987-05-02) & JP 61 277169 A (FUJI ELECTRIC CO LTD), 8. Dezember 1986 (1986-12-08) in der Anmeldung erwähnt
- PATENT ABSTRACTS OF JAPAN vol. 014, no. 055 (E-0882), 31. Januar 1990 (1990-01-31) & JP 01 279571 A (HITACHI LTD), 9. November 1989 (1989-11-09)

## Beschreibung

Die Erfindung betrifft eine Brennstoffzellenanordnung nach dem Oberbegriff des Anspruchs 1.

Es sind Brennstoffzellenanordnungen, insbesondere Anordnungen von Schmelzkarbonatbrennstoffzellen bekannt, bei denen eine Anzahl von Brennstoffzellen, die jeweils eine Anode, eine Kathode und eine zwischen diesen angeordnete poröse Elektrolytmatrix enthalten, in Form eines Brennstoffzellenstapels angeordnet sind.

Bei Schmelzkarbonatbrennstoffzellen werden Mischungen von Alkalikarbonaten als Elektrolyt verwendet, die bei der Betriebstemperatur der Brennstoffzellen flüssig sind. Der Elektrolyt ist in den porösen Elektrolytmatrizen sowie in den ebenfalls aus einem porösen Material hergestellten Anoden und Kathoden der Brennstoffzellen enthalten und wird durch Kapillarkräfte in diesen gehalten. Die Funktion und Leistungsfähigkeit einer Schmelzkarbonatbrennstoffzelle ist abhängig von einer vollständigen und richtigen Füllung des Elektrolyten, welche bei der Herstellung innerhalb schmaler Toleranzen eingehalten wird. Sowohl eine Überfüllung als auch eine Unterfüllung mit Elektrolyt sind für die Leistungsfähigkeit und Dauerhaftigkeit der Zellen schädlich.

Während des Brennstoffzellenbetriebs gehen Teile des in den Zellen vorhandenen Elektrolyten verloren aufgrund verschiedener Mechanismen, von denen die wesentlichsten sind:
- aufgrund der starken Benetzungseigenschaft der geschmolzenen Alkalikarbonate hat der Elektrolyt die Tendenz am Randbereich und an den für die Zuführung und Abführung von Brenngas und Oxidationsgas vorgesehenen Öffnungen aus der Zelle zu kriechen, wobei er sich dann auf der äußeren Oberfläche des Brennstoffzellenstapels und der benachbarten Komponenten verteilt;
- die Alkalikarbonate des Elektrolyten treten in chemische Reaktionen mit Konstruktionsmaterialien der Brennstoffzellen ein, wobei ein Teil des Elektrolyten in den sich ergebenden chemischen Verbindungen gebunden wird; und
- Bestandteile der Alkalikarbonate verbinden sich mit als Reaktionsprodukt in den Brennstoffzellen entstehendem Wasser zu Hydroxiden, welche bei der Betriebstemperatur der Brennstoffzellen verdampfen.

Der allmähliche Verlust von Elektrolyt während der Lebensdauer der Brennstoffzelle führt zu einer Verschlechterung von deren Leistung und wird möglicherweise zu einem die Brennstoffzellenlebensdauer begrenzenden Faktor.

Eine Möglichkeit die genannten Schwierigkeiten zu überwinden ist es ein Elektrolytreservoir zum Ausgleichen von Elektrolytverlusten aus den Brennstoffzellen vorzusehen.

So ist aus der DE 195 45 658 A1 eine Schmelzkarbonatbrennstoffzelle bekannt, bei der an einer Stelle wenigstens ein poröser Körper mit einem Vorrat an Elektrolyt vorhanden ist, um Elektrolytverluste auszugleichen. Dieser den Elektrolytvorrat bildende poröse Körper ist der einzelnen Brennstoffzelle zugeordnet, bei einer Brennstoffzellenanordnung mit einer Anzahl von in Form eines Stapels angeordneten Brennstoffzellen wäre somit jede einzelne Brennstoffzelle mit einem solchen porösen Körper zum Vorhalten eines Vorrats an Elektrolyt vorzusehen.

Aus der JP 61074265 A ist eine Matrixanordnung für eine Brennstoffzelle bekannt, bei der der Elektrolyt von einem der Matrix zugeordneten Elektrolytreservoir in die Matrix verteilt wird, um Verluste auszugleichen. Auch hier wäre bei einer Brennstoffzellenanordnung mit einer Anzahl von in Form eines Stapels angeordneten Brennstoffzellen jede Matrix der einzelnen Brennstoffzellen mit einem solchen Elektrolytreservoir zu versehen.

Weitere Vorschläge, bei denen jeweils einzelne Brennstoffzellen mit Elektrolytreservoiren zum Ausgleichen von Elektrolytverlusten versehen sind, sind aus der US 5 468 573, der US 4 185 145, der US 4 548 877 und der JP 61277169 A bekannt.

Weiterhin sind aus der US 4 467 019 und der JP 07326374 A Brennstoffzellenanordnungen mit mehreren in Form eines Stapels angeordneten Brennstoffzellen bekannt, bei denen jeweils die Elektrolytmatrix einer jeden Brennstoffzelle mit einem außerhalb des Brennstoffzellenstapels vorgesehenen Elektrolytreservoir verbunden ist, um auftretende Elektrolytverluste auszugleichen.

Schließlich ist aus der US 4 761 348 eine Brennstoffzellenanordnung bekannt, bei der an den Enden des Brennstoffzellenstapels jeweilige Elektrolytreservoire, eines mit einem Überschuss an Elektrolyt und eines mit einem Unterschuss an Elektrolyt, vorgesehen sind, die von den vollständigen Zellen des Stapels durch impermeable, aber elektrisch leitende Trennelemente getrennt sind, jedoch einem Austausch von Elektrolyt mit den Brennstoffzellen unterliegen.

Die bisherigen Lösungsvorschläge leiden verschiedene Nachteile. Bei einzelnen innerhalb einer jeden Brennstoffzelle vorgesehenen Elektrolytreservoiren kann nur eine begrenzte Menge von Elektrolyt vorgehalten werden, wenn nicht eine beträchtliche Zunahme bei Volumen und Kosten der Zellen in Kauf genommen werden sollen. Im Falle von Vorrichtungen zum Auffüllen des Elektrolytvorrats in den einzelnen Zellen ist es sehr schwierig die Nachfüllmenge genau auf die einzelnen Zellen innerhalb des Stapels zu verteilen und jede einzelne Zelle in korrekter Weise zu füllen. Kanäle oder Leitungen zum Auffüllen des Elektrolyten bilden Pfade für parasitäre Ströme entlang des Brennstoffzellenstapels, welche die Leistung der Brennstoffzellenanordnung schmälern und sogar diese zerstören können.

Eine weitere Schwierigkeit im Zusammenhang mit dem Verlust und dem Nachfüllen von Elektrolyt besteht bei in einem Stapel angeordneten Brennstoffzellen darin, dass die elektrisch geladenen Teilchen des Elektrolyten unter dem Einfluss des durch die Brennstoffzellenspannung längs des Stapels erzeugten elektrischen Feldes in Richtung der entgegengesetzten Polarität wandern. Daher haben die in dem Elektrolyt enthaltenen Alkaliionen die Tendenz unter dem Einfluss des elektrischen Feldes vom positiven Ende zum negativen Ende des Brennstoffzellenstapels zu wandern. Somit ist die Rate des Elektrolytverlusts in den Zellen am positiven Ende des Brennstoffzellenstapels wesentlich höher als die der Zellen am entgegengesetzten Ende. Bei einem einheitlichen Vorhalten oder Auffüllen von Elektrolyt für alle Zellen würden die Zellen in der Nähe des negativen Endes des Brennstoffzellenstapels überfüllt und diejenigen am positiven Ende nicht genügend gefüllt werden.

Es ist die Aufgabe der vorliegenden Erfindung eine verbesserte Brennstoffzellenanordnung mit einem Elektrolytreservoir zu schaffen.

Diese Aufgabe wird gelöst durch eine Brennstoffzellenanordnung mit den Merkmalen des Anspruchs 1.

Vorteilhafte Weiterbildungen der erfindungsgemäßen Brennstoffzellenanordnung sind in den Unteransprüchen gekennzeichnet.

Durch die Erfindung wird eine Brennstoffzellenanordnung mit einer Anzahl von in Form eines Stapels angeordneten Brennstoffzellen geschaffen, die jeweils Elektroden in Form einer Anode und einer Kathode und eine zwischen diesen angeordnete poröse Elektrolytmatrix, sowie einen Stromkollektor zum Kontaktieren der Elektroden enthalten, und wobei weiterhin ein Elektrolytreservoir zum Ausgleichen von Elektrolytverlusten aus den Brennstoffzellen vorgesehen ist. Erfindungsgemäß ist es vorgesehen, dass das Elektrolytreservoir an oder nahe einem Ende des Brennstoffzellenstapels angeordnet ist, wobei der Elektrolyt durch elektrische Kräfte innerhalb des Brennstoffzellenstapels zu den einzelnen Brennstoffzellen transportiert wird, und wobei als Elektrolytreservoir von einer tragenden Struktur gebildete Hohlräume dienen, in denen poröse Körper aufgenommen sind, in denen der Elektrolyt in Poren aufgenommen ist.

Ein wesentlicher Vorteil der erfindungsgemäßen Brennstoffzellenanordnung ist es, dass der Elektrolyt unter Wirkung der in dem Brennstoffzellenstapel wirkenden elektrischen Kräfte automatisch unter Anpassung an die unterschiedlichen Elektrolytverlustraten in den Zellen an unterschiedlichen Positionen innerhalb des Stapels nachgeliefert wird. Ein weiterer Vorteil ist es, dass die erfindungsgemäße Brennstoffzellenanordnung einfach und kostengünstig herzustellen und leicht zu betreiben ist. Ein anderer Vorteil ist es, dass aufgrund des Fehlens von Leitungen oder Kanälen entlang des Brennstoffzellenstapels zum Verteilen von Elektrolyt von außen auf die einzelnen Brennstoffzellen Pfade für nachteilige Kriechströme entfallen. Da das Elektrolytreservoir eine tragende Struktur beinhaltet, ist es nicht erforderlich, dass die Tragfunktion von dem Material ausgeübt wird, das den Elektrolyten unmittelbar aufnimmt. Das entsprechende Material wird somit mechanisch entlastet, was in Bezug auf die Kriechstabilität desselben vorteilhaft ist.

Vorzugsweise ist der Elektrolyt Bestandteil einer streich- oder fließfähigen Paste, die in die Hohlräume der Struktur eingebracht wird, wobei weitere Bestandteile der Paste nach dem Aushärten einen porösen Körper ergeben, dessen Poren den Elektrolyten beinhalten. Als tragende Struktur kann zum Beispiel ein Stromkollektor dienen, der am positivem Ende (bei Brennstoffzellen die Kathode) zwischen Endplatte und letzter Zelle eingebaut ist. Ebenso kann auch eine großporige Schaumstruktur als tragende Struktur vorgesehen sein, deren Poren mit Paste gefüllt werden. Alternativ kann die Paste in Aussparungen oder Bohrlöchern der Endplatte eingebracht werden, so dass die Endplatte selbst als tragende Struktur des Elektrolytreservoirs dient.

Gemäß einem weiteren vorteilhaften Aspekt der erfindungsgemäßen Brennstoffzellenanordnung ist es vorgesehen, dass das Elektrolytreservoir an einem Ende des Brennstoffzellenstapels eingebaut ist, und dass am anderen Ende des Brennstoffzellenstapels ein Elektrolytaufnahmereservoir in Form eines porösen Körpers zur Aufnahme von überschüssigem Elektrolyt vorgesehen ist. Hierdurch wird aufgrund der Wanderung des Elektrolyten vom Elektrolytreservoir zum anderen Ende des Brennstoffzellenstapels im Laufe der Zeit zuviel auftretender Elektrolyt entfernt. Der poröse Körper zur Aufnahme von überschüssigem Material kann in entsprechender Weise wie das Elektrolytreservoir aufgebaut sein, mit den entsprechenden Vorteilen.

Vorzugsweise ist das Elektrolytreservoir am positiven Ende des Brennstoffzellenstapels eingebaut, und das Elektrolytaufnahmereservoir zur Aufnahme von überschüssigem Elektrolyt ist am negativen Ende des Brennstoffzellenstapels vorgesehen.

Gemäß einer vorteilhaften Weiterbildung der erfindungsgemäßen Brennstoffzellenanordnung ist es vorgesehen, dass das Elektrolytreservoir auffüllbar ist. Hierdurch können während des Betriebs der Brennstoffzelle auftretende Elektrolytverluste kompensiert werden, so dass ein andauernd optimaler Betrieb der Brennstoffzellenanordnung durchführbar ist.

Vorzugsweise ist eine mit dem Elektrolytreservoir verbundene, aus dem Brennstoffzellenstapel nach außen führende Elektrolytfüllleitung zum Auffüllen des Elektrolytreservoirs von außen vorgesehen ist.

Eine bevorzugte Ausführungsform hiervon sieht es vor, dass die Elektrolytfüllleitung einen vertikalen oder nach außen ansteigenden Verlauf hat.

Gemäß einer besonders vorteilhaften Weiterbildung der erfindungsgemäßen Brennstoffzellenanordnung ist es vorgesehen, dass die Elektrolytfüllleitung zum Auffüllen des Elektrolyten in bei Umgebungstemperatur fester Form, vorzugsweise in Form von Pellets, vorgesehen ist, wobei der feste Elektrolyt bei Betriebstemperatur im Brennstoffzellenstapel schmilzt und vom Elektrolytreservoir aufgenommen wird.

Wie bereits dargestellt, besteht das Elektrolytreservoir aus einem porösen Körper, dessen Poren mit dem Elektrolyten gefüllt sind. Vorzugsweise ist die Porengröße des Elektrolytreservoirs größer als die der Poren der Elektrolytmatrix. Hierdurch wird aufgrund von Kapillarkräften der Transport des Elektrolyten vom Reservoir zu den Matrizen der Brennstoffzellen unterstützt.

Gemäß einer bevorzugten Ausführungsform der erfindungsgemäßen Brennstoffzellenanordnung besteht der poröse Körper des Elektrolytreservoirs aus Brennstoffzellenkathodenmaterial, das vollständig mit Elektrolyt getränkt ist.

Gemäß einer anderen bevorzugten Ausführungsform der erfindungsgemäßen Brennstoffzellenanordnung ist es vorgesehen, dass die tragende Struktur des Elektrolytreservoirs aus einem elektrisch leitenden Material besteht, das als elektrische Verbindung zwischen der letzten Brennstoffzelle und dem Ende des Brennstoffzellenstapels dient.

Gemäß einer vorteilhaften Weiterbildung der erfindungsgemäßen Brennstoffzellenanordnung ist es vorgesehen, dass entlang des Brennstoffzellenstapels zwischen einzelnen Komponenten der Brennstoffzellen und/oder des Brennstoffzellenstapels vorhandene kapillare Wanderwege für den Elektrolyten in ihrer Dicke und/oder in ihrer Porengröße im Sinne einer Optimierung des Elektrolyttransports innerhalb des Brennstoffzellenstapels von dem Elektrolytreservoir zu den Brennstoffzellen ausgelegt sind. Hierdurch kann die Geschwindigkeit des Transports und die Art der Verteilung des von dem Elektrolytreservoir zu den einzelnen Brennstoffzellen gelieferten Elektrolyten optimiert werden.

Gemäß einer anderen bevorzugten Ausführungsform der erfindungsgemäßen Brennstoffzellenanordnung ist es vorgesehen, dass Mittel zum Überwachen der Spannung der am meisten positiven Brennstoffzelle oder einer Gruppe von am meisten positiven Brennstoffzellen vorgesehen sind, und dass ein Absinken dieser Spannung als Signal zum Auffüllen des Elektrolytvorrats im Elektrolytreservoir verwendet wird. Da aufgrund der elektrischen Kräfte innerhalb des Brennstoffzellenstapels der Elektrolytverlust der Brennstoffzellen um so höher ist, je höher diese am positiven Ende des Brennstoffzellenstapels befindlich sind, ist die Spannung einer oder mehrerer Brennstoffzellen am positiven Ende des Stapels ein zuverlässiges Signal für die Notwendigkeit des Auffüllens des Elektrolytvorrats.

Schließlich ist es gemäß einem weiteren vorteilhaften Aspekt der erfindungsgemäßen Brennstoffzellenanordnung vorgesehen, dass der Elektrolyt im Elektrolytreservoir in einer Zusammensetzung aufgefüllt wird, die von der anfänglichen Zusammensetzung des Elektrolyten in den Elektrolytmatrizen der Brennstoffzellen verschieden ist, um disproportionale Elektrolytverluste während des Brennstoffzellenbetriebs auszugleichen. Der Elektrolyt, der zum Füllen des Elektrolytreservoirs verwendet wird, enthält somit diejenigen Komponenten in einer höheren Konzentration, die beim Betrieb mit einer größeren Rate verloren gehen, als es der anfänglichen oder normalen Zusammensetzung des Elektrolyten in den Elektrolytmatrizen entspricht.

Im folgenden werden Ausführungsbeispiele der erfindungsgemäßen Brennstoffzellenanordnung anhand der Zeichnung beschrieben:

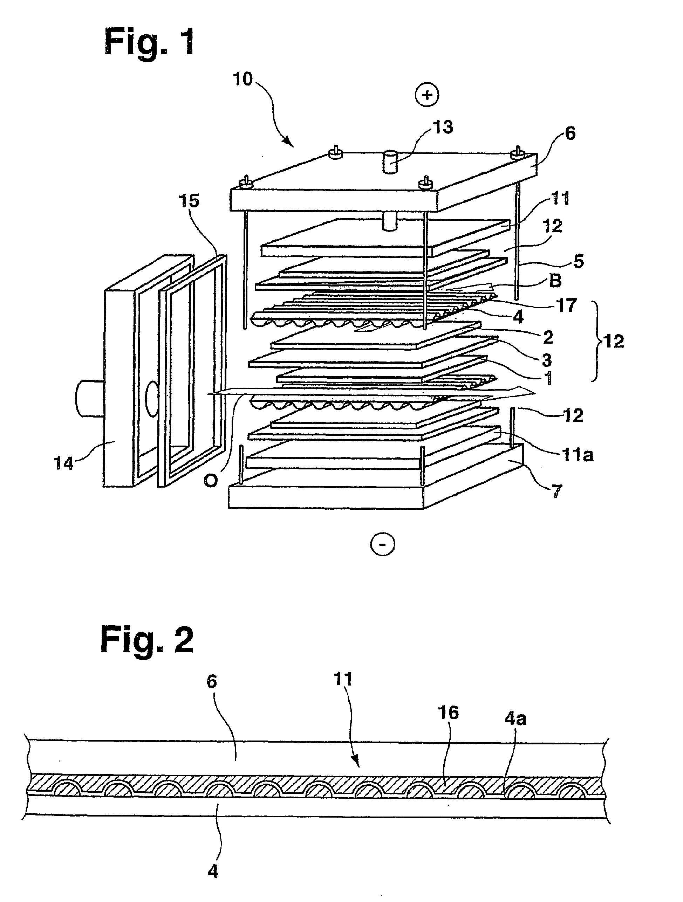

- Figur 1: zeigt eine schematisierte perspektivische Explosionsansicht einer Brennstoffzellenanordnung mit in Form eines Stapels angeordneten Brennstoffzellen gemäß einem Ausführungsbeispiel der Erfindung, wobei zum Zwecke der besseren Übersichtlichkeit nur einige wenige in dem Brennstoffzellenstapel enthaltene Brennstoffzellen dargestellt sind;
- Figur 2: zeigt in einer vergrößerten seitlichen Schnittansicht eines Stromkollektors, in dessen Hohlräumen gemäß einem weiteren bevorzugten Ausführungsbeispiel der Erfindung das Elektrolytreservoir mit einem porösen Körper zur Aufnahme von überschüssigem Elektrolyt vorgesehen ist.

In Figur 1 bedeutet das Bezugszeichen 10 einen Brennstoffzellenstapel, der aus einer Anzahl von Brennstoffzellen 12 besteht, die jeweils eine Anode 1, eine Kathode 2 und eine dazwischen angeordnete Elektrolytmatrix 3 enthalten. Benachbarte Brennstoffzellen 12 sind durch eine Bipolarplatte 4 und daran anliegende Stromkollektoren 17 voneinander getrennt, welche dazu dienen, die Ströme eines Brenngases B und eines Oxidationsgases O voneinander getrennt über die Anode 1 bzw. über die Kathode 2 der Brennstoffzellen zu führen, wobei die Anode 1 und die Kathode 2 benachbarter Brennstoffzellen durch die Bipolarplatte 4 gastechnisch voneinander getrennt sind. Die Stromkollektoren 17 besorgen die elektrische Kontaktierung der Zellen untereinander.

Der Brennstoffzellenstapel 10, der ein Vielzahl solcher Brennstoffzellen 12 enthält, von denen in der Figur zum Zwecke der Übersichtlichkeit jedoch nur einige wenige dargestellt sind, ist an seiner Oberseite und an seiner Unterseite jeweils durch eine Endplatte 6,7 abgeschlossen, wobei diese Endplatten 6,7 durch Zugstangen 5 miteinander verbunden und gegeneinander verspannt werden, so dass die einzelnen Brennstoffzellen 12 unter einem vorgegebenen Anpressdruck aneinander gehalten werden. An den Außenseiten des Brennstoffzellenstapels sind Gasverteiler 14 vorgesehen, welche über Gasverteilerdichtungen 15 gegen den Brennstoffzellenstapel 10 abgedichtet sind und dazu dienen, die Ströme von Brenngas B und Oxidationsgas O zuzuführen und abzuführen. Aus Gründen der Übersichtlichkeit ist nur ein solcher Gasverteiler 14 nebst Gasverteilerdichtung 15 in der Figur gezeigt.

An dem oberen Ende des Brennstoffzellenstapels 10, welches entsprechend der Orientierung der Brennstoffzellen 12 in Bezug auf die Lage ihrer Anode 1 und Kathode 2 das positive Ende des Brennstoffzellenstapels 10 ist, ist ein Elektrolytreservoir 11 angeordnet, welches zwischen der obersten, das heißt am meisten positiven Brennstoffzelle 12 und der oberen Endplatte 6 des Brennstoffzellenstapels 10 angeordnet ist.

Das Elektrolytreservoir 11 besteht aus einer tragenden Struktur, in dessen Hohlräumen poröse Körper 16 angeordnet sind, deren Poren mit dem Elektrolyten gefüllt sind. Von dem Elektrolytreservoir 11 wird der Elektrolyt durch elektrische Kräfte innerhalb des Brennstoffzellenstapels 10 zu den einzelnen Brennstoffzellen 12 transportiert, um die dort auftretenden Elektrolytverluste auszugleichen. Im einzelnen geschieht dies in der Weise, dass während des Betriebs der Brennstoffzellenanordnung der Elektrolyt, d.h. die in diesem enthaltenen Ionen unter dem Einfluss des innerhalb des Brennstoffzellenstapels vorhandenen elektrischen Feldes über Kapillarwege oder Oberflächenwege von dem positiven zu dem negativen Ende des Brennstoffzellenstapels wandern. Die Wege können z.B. an Dichtungsflächen mit externen Gasverteilern oder die Oberflächen von Gasverteilungskanälen innerhalb des Stapels im Falle einer Brennstoffzellenanordnung mit interner Gasverteilung sein.

Die tragende Struktur ist vorzugsweise ein Stromkollektor 4a der zwischen Endplatte 6 und der letzten Brennstoffzelle 12 des Stapel angeordnet ist. Alternativ besteht die tragende Struktur aus einem Strukturschaum mit Makroporen. In die Hohlräume des Stromkollektors oder des Strukturschaums wird eine Paste eingefüllt, die gieß- oder streichfähig ist. Die Paste besteht aus pulverförmigen Ausgangsstoffen, die mit einem flüssigen Binder verrührt werden. Durch Aushärten bildet sich ein poröser Körper 16, in dessen Poren der Elektrolyt aufgenommen ist.

Die Porengröße des den Elektrolyten aufnehmenden porösen Körpers 16 ist größer als die Größe der Poren der Elektrolytmatrix 3 der Brennstoffzellen, so dass aufgrund des Verhältnisses der kapillaren Rückhaltekräfte, welche auf den Elektrolyten wirken, zwischen dem Elektrolytreservoir 11 und den Elektrolytmatrizen 3 der Brennstoffzellen 12 der längs des Brennstoffzellenstapels 10 wandernde Elektrolyt seine Quelle in dem Elektrolytreservoir 11 haben wird, anstelle in den aktiven Brennstoffzellenkomponenten. Andererseits werden jedwede Mangelzustände an Elektrolyt in den Matrizen und/oder Elektroden der Brennstoffzellen aufgrund der Kapillarkräfte aus der kleinen, aber stetig aus dem Elektrolytreservoir 11 nachwandernden Elektrolytmenge aufgefüllt werden bis alle kleinen Poren der Matrix 3 und/oder der Elektroden 1,2 gefüllt sind.

Der poröse Körper 16 des Elektrolytreservoirs 11 besteht vorzugsweise aus dem Material der Brennstoffzellenkathoden, welches vollständig mit Elektrolyt getränkt ist. Der poröse Körper 16 kann auch in Form von ausgehärteten Formstücken in die Hohlräume eingesetzt oder eingefüllt werden. Vorzugsweise wird jedoch eine pastöse Masse eingefüllt, die an Luft innerhalb kurzer Zeit unter Porenbildung aushärtet. Die Zusammensetzung des in dem Elektrolytreservoir 11 vorgehaltenen Elektrolyten kann die des bei der Herstellung der Brennstoffzellen in die Elektrolytmatrizen eingebrachten Elektrolyten sein, vorzugsweise wird das Elektrolytreservoir 11 jedoch mit einem Elektrolyt aufgefüllt, der von der anfänglichen Zusammensetzung des Elektrolyten in den Matrizen 3 der Brennstoffzellen 12 verschieden ist, um disproportionale Elektrolytverluste während des Brennstoffzellenbetriebs auszugleichen. Das bedeutet, der Elektrolyt in dem Elektrolytreservoir 11 enthält diejenigen Komponenten in einem höheren Anteil, die während des Brennstoffzellenbetriebs schneller verloren gehen.

Die der Verteilung des Elektrolyten über den Brennstoffzellenstapel 10 dienenden kapillaren Wanderwege sind in ihrer Dicke und/oder Porengröße im Sinne einer Optimierung des Elektrolyttransports von dem Elektrolytreservoir 11 zu den Brennstoffzellen 12 bemessen, so dass die über diese Wege transportierte Elektrolytmenge im wesentlichen der Elektrolytmenge entspricht, die in den Brennstoffzellen 12 verloren geht.

Mit dem Elektrolytreservoir 11 ist ein Elektrolytfüllleitung 13 verbunden, die aus dem Brennstoffzellenstapel 10 nach außen führt und zum Auffüllen des Elektrolytreservoirs 11 dient. Diese Elektrolytfüllleitung 13 steht im Inneren mit dem porösen Körper des Elektrolytreservoirs 11 in Kontakt und führt mit einem ansteigenden oder vertikalen Verlauf aufwärts nach außen. Die Elektrolytfüllleitung 13 ist zum Auffüllen des Elektrolyten in bei Umgebungstemperatur fester Form vorgesehen, vorzugsweise in Form von Pellets, die in die Füllleitung 13 eingefüllt werden können, in das Innere des Brennstoffzellenstapels 10 fallen und unter der dort herrschenden Betriebstemperatur schmelzen und unter Wirkung der Kapillarkräfte des das Elektrolytreservoir 11 bildenden porösen Körpers aufgenommen werden. Die Menge und die Häufigkeit, mit welcher der Elektrolyt über die Füllleitung 13 nachgefüllt werden muss, kann berechnet werden aus experimentellen Daten und Erfahrungswerten im Hinblick auf ein typischen Elektrolytverlust bei dem betreffenden Brennstoffzellenstapel.

Da die tragende Struktur des Elektrolytreservoirs 11 vorzugsweise aus einem elektrisch leitenden Material besteht, kann sie gleichzeitig zur Kontaktierung der letzten Brennstoffzelle am positiven Ende des Brennstoffzellenstapels 10 verwendet werden, genauer gesagt zur Kontaktierung der Kathode 2 der am positiven Ende des Brennstoffzellenstapels 10 befindlichen Brennstoffzelle 12. Am anderen Ende des Brennstoffzellenstapels 10 kann zusätzlich eine entsprechende Struktur mit einem porösen Körper, ein Elektrolytaufnahmereservoir 11a zur Aufnahme von überschüssigem Elektrolyt vorgesehen sein.

Gemäß dem in Figur 2 dargestellten Ausführungsbeispiel besteht das Elektrolytreservoir 11 in einem Stromkollektor 4a, dessen Hohlräume mit einem porösen Körper 16 gefüllt sind. Dieser Stromkollektor 4a liegt zwischen einer Endplatte 6 und einer Bipolarplatte 4 der angrenzenden letzten Zelle, nämlich am positiven Ende des Brennstoffzellenstapels 10. Zwischen Bipolarplatte 4 und Kathode 2 der angrenzenden Zelle liegt ein Stromkollektor, der in Figur 1 aus Gründen der Übersichtlichkeit jedoch nicht dargestellt ist. Das Elektrolytreservoir am anderen Ende des Brennstoffzellenstapels 10 kann entsprechend ausgebildet sein.

Die Hohlräume zur Aufnahme von streich- und gießfähiger Paste zur Bildung eines porösen Körpers können nach einer alternativen Ausführungsform auch als Ausnehmungen oder Bohrlöcher in den Endplatten 6, 7 vorgesehen sein.

Das Reservoir 11a zur Aufnahme von überschüssigem Elektrolyt kann, vorzugsweise wie das Elektrolytreservoir 11, durch Eingießen einer fließfähigen Masse in einen Stromkollektor 4a gebildet werden. Diese Masse besteht zur Herstellung des Elektrolytreservoirs z.B. aus einem Keramikpulver (Porenbildner), dem Elektrolytmaterial und einem Binde- und/oder Lösungsmittel bzw. zur Herstellung des den überschüssigen Elektrolyt aufnehmenden Körpers z.B. aus einem Keramikpulver (Porenbildner) und einem Binde- und/oder Lösungsmittel, jedoch nicht oder nur zu einem sehr geringen Teil aus dem Elektrolytmaterial, welches dann lediglich die Funktion eines Hochtemperaturklebers für die Keramikpartikel übernimmt. Nach dem Aushärten des Bindemittels kann der mit dem Elektrolytreservoir 11 versehene Stromkollektor 4a am positiven Ende des Brennstoffzellenstapels 10, bzw. das den überschüssigen Elektrolyt aufnehmende Elektrolytaufnahmereservoir 11a am negativen Ende des Brennstoffzellenstapels 10 eingebaut werden.

Als Information darüber, ob der Vorrat an Elektrolyt in dem Elektrolytreservoir 11 noch genügt, wird die Spannung der am meisten positiven Brennstoffzelle, d.h. der Brennstoffzelle, die sich am positiven Ende des Brennstoffzellenstapels 10 befindet, oder einer Gruppe von Brennstoffzellen an diesem Ende des Brennstoffzellenstapels 10 überwacht, wobei ein Absinken dieser Spannung als Signal zum Auffüllen des Elektrolytvorrats im Elektrolytreservoir 11 über die Füllleitung 13 verwendet wird. Ein Rückgang des Elektrolyten in einer Brennstoffzelle führt zu einem Abfall der Brennstoffzellenspannung und kann daher als repräsentatives Signal für einen Elektrolytverlust aus der Brennstoffzelle verwendet werden. Da die am positiven Ende des Brennstoffzellenstapels befindlichen Brennstoffzellenstapels 10 befindlichen Brennstoffzellen aufgrund des innerhalb desselben herrschenden elektrischen Feldes den größten Elektrolytverlust unterliegen, ist die Überwachung der Spannung einer oder mehrerer am positiven Ende des Brennstoffzellenstapels 10 befindlichen Zellen ein geeignetes Mittel, um ein entsprechendes Signal zum Auffüllen des Elektrolyten zu gewinnen.

### Bezugszeichenliste

- 1: Anode
- 2: Kathode
- 3: Elektrolytmatrix
- 4: Bipolarplatte
- 4a: Stromkollektor
- 5: Zugstange
- 6: Endplatte
- 7: Endplatte

- 10: Brennstoffzellenstapel
- 11: Elektrolytreservoir
- 11a: Elektrolytaufnahmereservoir
- 12: Brennstoffzelle
- 13: Füllleitung
- 14: Gasverteiler
- 15: Gasverteilerdichtung
- 16: Poröser Körper
- 17: Stromkollektor
- B: Brenngas
- O: Oxidationsgas

## Patentansprüche

1. Brennstoffzellenanordnung mit einer Anzahl von in Form eines Stapels (10) zwischen Endplatten (6, 7) angeordneten Brennstoffzellen (12), die jeweils Elektroden in Form einer Anode (1) und einer Kathode (2) und eine zwischen diesen angeordnete poröse Elektrolytmatrix (3), sowie zwischen den Elektroden zweier Brennstoffzellen (12) angeordnete Stromkollektoren (17) und Bipolarbleche (4) enthalten, und mit einem Elektrolytreservoir (11) zum Ausgleichen von Elektrolytverlusten aus den Brennstoffzellen (12), wobei das Elektrolytreservoir (11) an oder nahe einem Ende des Brennstoffzellenstapels (10) vorgesehen ist, und wobei als Elektrolytreservoir (11) in der Brennstoffzellenanordnung vorgesehene Hohlräume dienen, die von Strukturen mit mechanischer Tragfunktion gebildet sind, in denen poröse Körper (16) aufgenommen sind, in denen der Elektrolyt in Poren aufgenommen ist, **dadurch gekennzeichnet, dass** der Elektrolyt als Bestandteil einer streich- oder fließfähigen Paste in die Hohlräume eingebracht wird, wobei weitere Bestandteile der Paste nach dem Aushärten den porösen Körper (16) ergeben.

2. Brennstoffzellenanordnung nach Anspruch 1 **dadurch gekennzeichnet, dass** die Paste durch Verrühren pulverförmiger Ausgangsstoffe mit einem flüssigen Binder erzeugt wird.

3. Brennstoffzellenanordnung nach Anspruch 1 oder 2, **dadurch gekennzeichnet, dass** das Elektrolytreservoir (11) aus einer Hohlräume bildenden Struktur zwischen Endplatte (6) und der letzten Zelle am positiven Ende des Brennstoffzellenstapels (10) besteht.

4. Brennstoffzellenanordnung nach einem der Ansprüche 1 bis 3, **dadurch gekennzeichnet, dass** als Hohlräume bildende Struktur ein Stromkollektor (4a) dient, wie er auch an anderer Stelle des Brennstoffzellenstapels zur Stromkontaktierung benutzt wird.

5. Brennstoffzellenanordnung nach einem der Ansprüche 1 bis 3, **dadurch gekennzeichnet, dass** als Hohlräume bildende Struktur eine Schaumstruktur mit Makroporen dient.

6. Brennstoffzellenanordnung nach einem der Ansprüche 1 oder 2, **dadurch gekennzeichnet, dass** die Hohlräume in den Endplatten (6, 7) in Form von Aussparungen oder Bohrlöchern ausgebildet sind.

7. Brennstoffzellenanordnung nach einem der Ansprüche 1 bis 6, **dadurch gekennzeichnet, dass** das Elektrolytreservoir (11) an einem Ende des Brennstoffzellenstapels (10) eingebaut ist, und dass am anderen Ende des Brennstoffzellenstapels (10) ein Elektrolytaufnahmereservoir (11a) zur Aufnahme von überschüssigem Elektrolyt vorgesehen ist.

8. Brennstoffzellenanordnung nach Anspruch 6, **dadurch gekennzeichnet, dass** das Elektrolytreservoir (11) am positiven Ende des Brennstoffzellenstapels (10) eingebaut ist, und dass das Elektrolytaufnahmereservoir (11a) zur Aufnahme von überschüssigem Elektrolyt am negativen Ende des Brennstoffzellenstapels (10) vorgesehen ist.

9. Brennstoffzellenanordnung nach Anspruch 7 oder 8, **dadurch gekennzeichnet, dass** das Elektrolytaufnahmereservoir (11a) zur Aufnahme von überschüssigem Elektrolyt durch Eingießen einer fließfähigen Masse gebildet ist, die nach dem Aushärten einen porösen Körper bildet.

10. Brennstoffzellenanordnung nach einem der Ansprüche 1 bis 9, **dadurch gekennzeichnet, dass** das Elektrolytreservoir (11) auffüllbar ist.

11. Brennstoffzellenanordnung nach Anspruch 10, **dadurch gekennzeichnet, dass** eine mit dem Elektrolytreservoir (11) verbundene, aus dem Brennstoffzellenstapel (10) nach außen führende Elektrolytfüllleitung (13) zum Auffüllen des Elektrolytreservoirs (11) von außen vorgesehen ist.

12. Brennstoffzellenanordnung nach Anspruch 11, **dadurch gekennzeichnet, dass** die Elektrolytfüllleitung (13) einen vertikalen oder nach außen ansteigenden Verlauf hat.

13. Brennstoffzellenanordnung nach Anspruch 11 oder 12, **dadurch gekennzeichnet, dass** die Elektrolytfüllleitung (13) zum Auffüllen des Elektrolyten in bei Umgebungstemperatur fester Form, vorzugsweise in Form von Pellets, vorgesehen ist, wobei der feste Elektrolyt bei Betriebstemperatur im Brennstoffzellenstapel (10) schmilzt und vom Elektrolytreservoir (11) aufgenommen wird.

14. Brennstoffzellenanordnung nach einem der Ansprüche 1 bis 13, **dadurch gekennzeichnet, dass** die Porengröße des Elektrolytreservoirs (11) größer als die der Poren der Elektrolytmatrix (3) ist.

15. Brennstoffzellenanordnung nach einem der Ansprüche 1 bis 14, **dadurch gekennzeichnet, dass** der poröse Körper des Elektrolytreservoirs (11) aus Brennstoffzellenkathodenmaterial besteht, das vollständig mit Elektrolyt getränkt ist.

16. Brennstoffzellenanordnung nach einem der Ansprüche 1 bis 15, **dadurch gekennzeichnet, dass** die Hohlräume bildende Struktur des Elektrolytreservoirs (11) aus einem elektrisch leitenden Material besteht.

17. Brennstoffzellenanordnung nach einem der Ansprüche 1 bis 16, **dadurch gekennzeichnet, dass** entlang des Brennstoffzellenstapels (10) zwischen einzelnen Komponenten der Brennstoffzellen (12) und/oder des Brennstoffzellenstapels (10) vorhandene kapillare Wanderwege für den Elektrolyten in ihrer Dicke und/oder in ihrer Porengröße im Sinne einer Optimierung des Elektrolyttransports innerhalb des Brennstoffzellenstapels (10) von dem Elektrolytreservoir (11) zu den Brennstoffzellen (12) ausgelegt sind.

18. Brennstoffzellenanordnung nach einem der Ansprüche 1 bis 17, **dadurch gekennzeichnet, dass** Mittel zum Überwachen der Spannung der am meisten positiven Brennstoffzelle (12) oder einer Gruppe von am meisten positiven Brennstoffzellen vorgesehen sind, und dass ein Absinken dieser Spannung als Signal zum Auffüllen des Elektrolytvorrats im Elektrolytreservoir (11) verwendet wird.

19. Brennstoffzellenanordnung nach einem der Ansprüche 1 bis 18, **dadurch gekennzeichnet, dass** der Elektrolyt im Elektrolytreservoir (11) in einer Zusammensetzung aufgefüllt wird, die von der anfänglichen Zusammensetzung des Elektrolyten in den Elektrolytmatrizen (3) der Brennstoffzellen (12) verschieden ist, um disproportionale Elektrolytverluste während des Brennstoffzellenbetriebs auszugleichen.

## Claims

1. Fuel cell arrangement having a number of fuel cells (12), which are arranged in the form of a stack (10) between end plates (6, 7) and each contain electrodes in the form of an anode (1) and a cathode (2) and a porous electrolyte matrix (3) which is arranged between them, as well as current collectors (17) and bipolar plates (4) which are arranged between the electrodes of two fuel cells (12), and having an electrolyte reservoir (11) in order to compensate for electrolyte losses from the fuel cells (12), wherein the electrolyte reservoir (11) is provided at or close to one end of the fuel cell stack (10), and wherein cavities which are provided in the fuel cell arrangement are used as the electrolyte reservoir (11) and are formed by structures with a mechanical load-value function, in which porous bodies (16) are accommodated, in which the electrolyte is accommodated in pores, **characterized in that** the electrolyte is introduced into the cavities as a component of a paste which can be painted or can flow, wherein further components of the paste produce the porous bodies (16) after curing.

2. Fuel cell arrangement according to Claim 1,
**characterized in that** the paste is produced using a liquid binder, by stirring raw materials in the form of powder.

3. Fuel cell arrangement according to Claim 1 or 2, **characterized in that** the electrolyte reservoir (11) comprises a structure, which forms cavities, between the end plate (6) and the last cell at the positive end of the fuel cell stack (10).

4. Fuel cell arrangement according to one of Claims 1 to 3, **characterized in that** a current collector (4a) is used as the structure which forms cavities, and is also used at another point for making the electrical contact in the fuel cell stack.

5. Fuel cell arrangement according to one of Claims 1 to 3, **characterized in that** a foam structure with macropores is used as the structure which forms cavities.

6. Fuel cell arrangement according to one of Claims 1 or 2, **characterized in that** the cavities in the end plates (6, 7) are in the form of cutouts or drilled holes.

7. Fuel cell arrangement according to one of Claims 1 to 6, **characterized in that** the electrolyte reservoir (11) is fitted at one end of the fuel cell stack (10), and **in that** an electrolyte accommodation reservoir (11a) for accommodation of excess electrolyte is provided at the other end of the fuel cell stack (10).

8. Fuel cell arrangement according to Claim 6,
**characterized in that** the electrolyte reservoir (11) is fitted at the positive end of the fuel cell stack (10) and **in that** the electrolyte accommodation reservoir (11a) for accommodation of excess electrolyte is provided at the negative end of the fuel cell stack (10).

9. Fuel cell arrangement according to Claim 7 or 8, **characterized in that** the electrolyte accommodation reservoir (11a) for accommodation of excess electrolyte is formed by encapsulation using a compound which can flow and forms a porous body after curing.

10. Fuel cell arrangement according to one of Claims 1 to 9, **characterized in that** the electrolyte reservoir (11) can be filled.

11. Fuel cell arrangement according to Claim 10,
**characterized in that** an electrolyte filling line (13), which is connected to the electrolyte reservoir (11) and leads outwards from the fuel cell stack (10), is provided in order to fill the electrolyte reservoir (11) from the outside.

12. Fuel cell arrangement according to Claim 11,
**characterized in that** the electrolyte filling line (13) has a vertical profile, or a profile which rises outwards.

13. Fuel cell arrangement according to Claim 11 or 12, **characterized in that** the electrolyte filling line (13) for filling of the electrolyte is provided in a form which is solid at the environmental temperature, preferably in the form of pellets, with the solid electrolyte melting at the operating temperature in the fuel cell stack (10), and being accommodated by the electrolyte reservoir (11).

14. Fuel cell arrangement according to one of Claims 1 to 13, **characterized in that** the pore size of the electrolyte reservoir (11) is larger than the pores of the electrolyte matrix (3).

15. Fuel cell arrangement according to one of Claims 1 to 14, **characterized in that** the porous body of the electrolyte reservoir (11) is composed of fuel cell cathode material which is completely impregnated with electrolyte.

16. Fuel cell arrangement according to one of Claims 1 to 15, **characterized in that** the structure of the electrolyte reservoir (11) which forms cavities is composed of an electrically conductive material.

17. Fuel cell arrangement according to one of Claims 1 to 16, **characterized in that** the thickness and/or the pore size of capillary migration routes for the electrolyte, which are provided along the fuel cell stack (10) between individual components of the fuel cells (12) and/or of the fuel cell stack (10) are/is designed for optimization of the electrolyte transport within the fuel cell stack (10) from the electrolyte reservoir (11) to the fuel cells (12).

18. Fuel cell arrangement according to one of Claims 1 to 17, **characterized in that** means are provided for monitoring the voltage of the most positive fuel cell (12) or of a group of the most positive fuel cells, and **in that** a drop in this voltage is used as a signal to fill the electrolyte supply in the electrolyte reservoir (11).

19. Fuel cell arrangement according to one of Claims 1 to 18, **characterized in that** the electrolyte in the electrolyte reservoir (11) is filled using a composition which differs from the initial composition of the electrolyte in the electrolyte matrices (3) of the fuel cells (12), in order to compensate for disproportionate electrolyte losses during fuel cell operation.

## Revendications

1. Système de cellules à combustible qui présente :
plusieurs cellules à combustible (12) disposées en pile (10) entre des plaques d'extrémité (6, 7), qui présentent chacune des électrodes sous la forme d'une anode (1) et d'une cathode (2) entre lesquelles est disposée une matrice poreuse (3) en électrolyte,
des collecteurs de courant (17) et des tôles bipolaires (4) disposés entre les électrodes de deux cellules à combustible (12) et
un réservoir (11) d'électrolyte qui compense les pertes d'électrolyte par les cellules à combustible (12),
le réservoir d'électrolyte (11) étant prévu sur une extrémité de la pile (10) de cellules à combustible ou à proximité de celle-ci,
des cavités prévues dans le système de cellules à combustible servant de réservoir (11) à électrolyte et étant formées de structures qui assurent une fonction de support mécanique et dans lesquelles sont logés des corps poreux (16) dont les pores reprennent l'électrolyte,
**caractérisé en ce que**
l'électrolyte est appliqué dans les cavités sous la forme d'un composant constitué d'une pâte apte à être étendue ou fluide, d'autres composants de la pâte formant le corps poreux (16) après durcissement.

2. Système de cellules à combustible selon la revendication 1, **caractérisé en ce que** la pâte est formée en brassant des matières premières poudreuses avec un liant liquide.

3. Système de cellules à combustible selon les revendications 1 ou 2, **caractérisé en ce que** le réservoir (11) d'électrolyte est constitué d'une structure qui forme des cavités et qui est située entre la plaque d'extrémité (6) et la dernière cellule de l'extrémité positive de la pile (10) de cellules à combustible.

4. Système de cellules à combustible selon l'une des revendications 1 à 3, **caractérisé en ce qu'**un collecteur de courant (4a) sert de structure formant des cavités et est utilisé pour assurer le contact de courant en d'autres emplacements de la pile de cellules à combustible.

5. Système de cellules à combustible selon l'une des revendications 1 à 3, **caractérisé en ce qu'**une structure moussée contenant des macropores sert de structure formant les cavités.

6. Système de cellules à combustible selon l'une des revendications 1 ou 2, **caractérisé en ce que** les cavités sont formées dans les plaques d'extrémité (6, 7) sous la forme de découpes ou de trous alésés.

7. Système de cellules à combustible selon l'une des revendications 1 à 6, **caractérisé en ce que** le réservoir d'électrolyte (11) est monté à une extrémité de la pile (10) de cellules à combustible et **en ce qu'**un réservoir (11a) de reprise d'électrolyte qui reprend l'électrolyte en excès est prévu à l'autre extrémité de la pile (10) de cellules à combustible.

8. Système de cellules à combustible selon la revendication 6, **caractérisé en ce que** le réservoir (11) d'électrolyte est monté à l'extrémité positive de la pile (10) de cellules à combustible et **en ce que** le réservoir (11a) de reprise d'électrolyte est prévu pour reprendre l'électrolyte en excès à l'extrémité négative de la pile (10) de cellules à combustible.

9. Système de cellules à combustible selon les revendications 7 ou 8, **caractérisé en ce que** le réservoir (11a) de reprise d'électrolyte qui reprend l'électrolyte en excès est formé par coulée d'une pâte fluide qui forme un corps poreux après durcissement.

10. Système de cellules à combustible selon l'une des revendications 1 à 9, **caractérisé en ce que** le réservoir d'électrolyte (11) peut être rempli.

11. Système de cellules à combustible selon la revendication 10, **caractérisé en ce qu'**un conduit (13) de remplissage d'électrolyte relié au réservoir (11) d'électrolyte et conduisant à l'extérieur de la pile (10) de cellules à combustible est prévu pour remplir de l'extérieur le réservoir (11) d'électrolyte.

12. Système de cellules à combustible selon la revendication 11, **caractérisé en ce que** le conduit (13) de remplissage d'électrolyte s'étend verticalement ou remonte vers l'extérieur.

13. Système de cellules à combustible selon les revendications 11 ou 12, **caractérisé en ce que** le conduit (13) de remplissage d'électrolyte qui permet d'apporter l'électrolyte est prévu sous forme solide à température ambiante, de préférence sous forme de pastilles, l'électrolyte solide fondant dans la pile (10) de cellules à combustible à température de fonctionnement et étant repris par le réservoir (11) d'électrolyte.

14. Système de cellules à combustible selon l'une des revendications 1 à 13, **caractérisé en ce que** la taille des pores du réservoir (11) d'électrolyte est plus grande que celle des pores de la matrice (3) d'électrolyte.

15. Système de cellules à combustible selon l'une des revendications 1 à 14, **caractérisé en ce que** le corps poreux du réservoir (11) d'électrolyte est constitué d'un matériau de cathode de cellule à combustible complètement imprégné d'électrolyte.

16. Système de cellules à combustible selon l'une des revendications 1 à 15, **caractérisé en ce que** la structure du réservoir d'électrolyte (11) qui forme les cavités est constituée d'un matériau électriquement conducteur.

17. Système de cellules à combustible selon l'une des revendications 1 à 16, **caractérisé en ce que** le long de la pile (10) de cellules à combustible, entre différents composants des cellules à combustible (12) et/ou de la pile (10) de cellules à combustible, des voies capillaires prévues pour la circulation de l'électrolyte ont une épaisseur et/ou une taille des pores dimensionnées pour optimiser le transport de l'électrolyte entre le réservoir (11) d'électrolyte et les cellules à combustible (12) à l'intérieur de la pile (10) de cellules à combustible.

18. Système de cellules à combustible selon l'une des revendications 1 à 17, **caractérisé en ce que** des moyens de surveillance de la tension de la cellule à combustible (12) la plupart du temps positive ou d'un groupe de cellules à combustible la plupart du temps positives sont prévus et **en ce qu'**une baisse de cette tension est utilisée comme signal pour envoyer la réserve d'électrolyte dans le réservoir (11) d'électrolyte.

19. Système de cellules à combustible selon l'une des revendications 1 à 18, **caractérisé en ce que** l'électrolyte est placé dans le réservoir (11) d'électrolyte dans une composition qui est différente de la composition initiale de l'électrolyte dans la matrice (3) d'électrolyte des cellules à combustible (12) pour compenser les pertes disproportionnées d'électrolyte pendant le fonctionnement des cellules à combustible.
